# EUROPÄISCHE PATENTSCHRIFT

(11) **EP 3 532 759 B1**
(45) Veröffentlichungstag und Bekanntmachung des Hinweises auf die Patenterteilung: **15.07.2020**
(21) Anmeldenummer: 17797051.4
(22) Anmeldetag: 25.10.2017
(51) Int. Cl.: F16L 27/04, F16L 39/00, F16L 27/02

(54) **VORRICHTUNG ZUR VERBINDUNG VON ROHRENDEN DOPPELWANDIGER ROHRE**
DEVICE FOR CONNECTING PIPE ENDS OF A DOUBLE-WALLED PIPES
DISPOSITIF DE RACCORDEMENT D'EXTRÉMITÉS DE TUBES À PAROI DOUBLE

(30) Priorität: 28.10.2016 DE 102016221278
(43) Veröffentlichungstag der Anmeldung: 04.09.2019
(73) Patentinhaber: PFW Aerospace GmbH, 67346 Speyer (DE)
(72) Erfinder: EITZENBERGER, Berthold, 67071 Ludwigshafen/Rhein (DE)
(74) Vertreter: Hörschler, Wolfram Johannes
(86) Internationale Anmeldenummer: PCT/EP2017/001257
(87) Internationale Veröffentlichungsnummer: WO 2018/077473

(56) Entgegenhaltungen:
- EP-A1- 1 363 061
- DE-A1- 19 944 247
- FR-A1- 2 898 867
- FR-A1- 2 961 174
- GB-A- 1 072 466

## Beschreibung

### Technisches Gebiet

Die vorliegende Erfindung bezieht sich auf eine Vorrichtung zur Verbindung von Rohrenden doppelwandiger Rohre zur Winkelkompensation und zur Längenkompensation. Die Erfindung bezieht sich ferner auf die Verwendung der Vorrichtung in Luftfahrzeugen, insbesondere in Rohrsystemen innerhalb von Strukturteilen, wie beispielsweise Flügeln oder Rumpfabschnitten von Flugzeugen.

### Stand der Technik

EP 2 682 659 A1 hat eine Kupplungsvorrichtung zum Gegenstand. Die Kupplungseinrichtung dient der lösbaren Verbindung von fluidführenden Rohrenden von Rohren. Ein jedes der miteinander zu verbindenden Rohrenden ist von einer Hülse umgeben, an deren Umfang zumindest zwei sich in Umfangsrichtung erstreckende Rippen ausgeführt sind, zwischen denen ein erstes ringförmiges Dichtungselement aufgenommen ist. Das erste ringförmige Dichtungselement wird ferner von einer inneren Hülse beaufschlagt. Des Weiteren umfasst die aus EP 2 682 659 A bekannte Kupplungsvorrichtung eine äußere Hülse, welche mit sich radial nach innen erstreckenden Rippen oder Rippenabschnitten versehen ist. Diese sind entweder in einem axialen Abstand in Bezug auf eine weitere ringförmig verlaufende Rippe der Hülsen angeordnet oder in einer Vertiefung, die innerhalb der Hülsen ausgebildet ist. Die axiale Vertiefung befindet sich zwischen besagter Rippe und einer vierten sich in Umfangsrichtung erstreckenden Rippe.

Die Vorrichtung gemäß EP 2 682 659 A1 erlaubt den Ausgleich geringer Winkeltoleranzen zwischen den Konnektoren und den sie miteinander verbindenden Rohren. Eine elastische, ungleichmäßige Verformung der Dichtung bei einer Winkelstelle von Konnektor zu Rohrende bewirkt, dass die Dichtung in eine umfänglich längere ovale Form gebracht wird. Die entstehenden unterschiedlichen Spaltmaße der Dichtungsgeometrie, umfassend Dichtungsnut und Dichtfläche an Konnektor und Rohrende, werden über die elastische Verformung des Dichtungsquerschnittes ausgeglichen. Dies bedeutet eine enge Begrenzung der Winkeltoleranzen zwischen Konnektor und Rohrende sowie einen hohen Verschleiß an der Dichtung, da diese gleichzeitig auch einen Längenausgleich ermöglicht. Sich einstellende Leckagen können die Folge sein.

US 8,360,477 B2 bezieht sich auf einen Rohrendenverbinder. Aus diesem Dokument geht ein Verbindungssystem hervor, zur abgedichteten Verbindung zweier fluidführender Leitungen mit zwei oder mehr verschiebbaren Lagerungen zur Aufrechterhaltung einer mechanischen Verbindung zwischen den fluidführenden Leitungen und einem O-Ring zur Aufrechterhaltung einer Fluidabdichtung zwischen den beiden fluidführenden Leitungen. An einem Ende einer ersten fluidführenden Leitung ist ein Sockel ausgeführt mit einer inneren Oberfläche, die eine Dichtungsoberfläche darstellt. Eine Anzahl von Schiebelagerungen wird durch entsprechende Lagerungskanäle auf der äußeren Oberfläche einer zweiten fluidführenden Leitung in Position gehalten. Die Schiebelagerungen stehen in mechanischem Kontakt mit einer inneren Oberfläche des Sockels, der in der ersten fluidführenden Leitung ausgeführt ist. Der O-Ring sorgt für einen dichtenden Kontakt mit einer Dichtungsfläche, die als Teil der inneren Oberfläche der ersten fluidführenden Leitung definiert ist. Um eine elektrische Leitfähigkeit sicherzustellen, ist eine Anordnung vorgesehen, welche sowohl die erste fluidführende Leitung als auch die zweite fluidführende Leitung kontaktiert. EP1363061 A1 offenbart auch eine Vorrichtung zur Verbindung von Rohrenden doppelwandiger Rohre zur Winkelkompensation und zur Längenkompensation.

Heutige Entwicklungstendenzen in der Luftfahrtindustrie verlaufen dahingehend, dass heutige Fracht- und Passagierflugzeuge mit flexibleren Strukturkomponenten versehen werden. Dies bedeutet, dass beispielsweise Flügel, die sich von der Flügelwurzel am Rumpf eines Flugzeugs zur Flügelspitze erstrecken und Rumpfabschnitte im Vergleich zu früheren Auslegungsmustern wesentlich größeren mechanischen Verformungen ausgesetzt sind. Passiert ein Passagier- oder ein Frachtflugzeug Turbulenzen, kann es zum Beispiel zu Auslenkungen der Flügelspitze in Bezug auf die Flügelwurzel von mehreren Metern kommen. Dies stellt besondere Dichtigkeitsanforderungen an im Inneren von Tragflächen verlaufende Kraftstoffleitungen. Diese sind so auszulegen, dass diese sowohl eine Längenkompensation als auch eine Winkelkompensation bei besagten Bewegungen der Flügel und damit von Leitungen innerhalb der Tragfläche sicherstellen. Ferner ist eine fluiddichte Verbindung sicherzustellen. Zur fluiddichten Verbindung von Leitungen oder Leitungsabschnitten, beispielsweise von Kraftstoffleitungen im Flugzeugbau, kommen heute Verbindungselemente, die auch als Konnektoren bezeichnet werden, zum Einsatz. Diese stellen Verbindungen zwischen doppelwandigen Rohren innerhalb von Strukturbauteilen, wie beispielsweise Rumpfabschnitten der Tragflächen dar. Derartige Konnektoren sind in der Regel mit Strukturbauteilen des Luftfahrzeuges verbunden.

Des Weiteren steht bei heutigen Luftfahrtanwendungen die Forderung im Raum, dass durch Zulieferer gefertigte Bauteile bzw. komplette Baueinheiten höhere Einzelteiltoleranzen und höhere Montagetoleranzen aufweisen, so dass ein schnellerer Montageablauf bei der Fertigung von Flugzeugen in der Endmontage möglich ist. Die bei der Endmontage von Flugzeugen bzw. Flugzeugkomponenten auftretenden Montagezeiten könnten so erheblich verkürzt werden.

### Darstellung der Erfindung

Der vorliegenden Erfindung liegt die Aufgabe zugrunde, eine Vorrichtung zur Verbindung von Rohrenden doppelwandiger Rohre mit Winkelkompensation und Längenkompensation bei einer Relativbewegung der Rohre zueinander bereitzustellen, die einerseits höhere Einzelteiltoleranzen und in Bezug auf die komplette Baueinheit höhere Montagetoleranzen zulässt, andererseits bei entsprechender Dichtigkeit höhere Auslenkwinkel zwischen den zu verbindenden Leitungen bzw. Leitungsabschnitten und Längenkompensationen bei Relativbewegung der miteinander fluiddicht zu verbindenden Leitungen bzw. Leitungsabschnitte sicherstellt.

Erfindungsgemäß wird diese Aufgabe durch die Merkmale des Patentanspruches 1 gelöst.

An der erfindungsgemäß vorgeschlagenen Vorrichtung zur Verbindung von Rohrenden doppelwandiger Rohre sind zwischen zwei Paaren von Kugelköpfen und Kugelkäfigen, die zueinander konzentrisch positioniert sind, Dichtelemente aufgenommen, die bei Auslenkung von Rohrenden relativ zu dem mit der Struktur verbundenen Verbindungselement bzw. Konnektor eine konstante gleichmäßige Verformungen erfahren. Dies begünstigt einerseits einen minimalen Verschleiß der eingesetzten Dichtelemente bei Beibehaltung maximaler Winkelbeweglichkeit zur Kompensation starker Relativbewegungen zwischen den fluiddicht miteinander zu verbindenden Rohrenden doppelwandiger Rohre und erlaubt andererseits höhere Einzelteiltoleranzen und Montagetoleranzen der kompletten Baueinheit. Neben einer Winkelkompensation ist die erfindungsgemäß vorgeschlagene Vorrichtung zur Verbindung von Rohrenden doppelwandiger Rohre in der Lage, auch bei Längenänderungen der Rohrenden, d.h. ein Herausbewegen der Rohrenden aus Anschlussteilen, die mit dem Konnektor verbunden sind zu kompensieren, ohne dass die Dichtfunktion beeinträchtigt ist. ,

Der erfindungsgemäß vorgeschlagenen Lösung folgend, umfasst die Vorrichtung bzw. der Konnektor erste und zweite Kugelköpfe, die an dem doppelwandig ausgeführten Konnektor konzentrisch in Bezug zueinander positioniert sind. Die Kugelkonzentrizität ermöglicht eine winkelbewegliche Dichtigkeit der Dichtpartner, ohne dass eine Verformung des elastischen Dichtungsmaterials der Dichtungen auftritt.

In Weiterbildung der erfindungsgemäß vorgeschlagenen Lösung umfasst der doppelwandige Konnektor Befestigungselemente, mit welchen der doppelwandige Konnektor mit einer Struktur, insbesondere mit einer Struktur eines Luftfahrzeugs verbunden ist. Diese Befestigungselemente können den Körper des beispielsweise rohrförmig ausgebildeten Konnektors umschließen und an ihrer Unterseite Öffnungen aufweisen, mit denen der doppelwandige Konnektor mit der Struktur, d.h. einem Rumpfabschnitt oder einem Tragflächenabschnitt eines Flugzeugs verbunden wird.

In einer vorteilhaften Ausführungsvariante besteht die Möglichkeit, die ersten Kugelköpfe am doppelwandigen Konnektor auszuführen, d.h. die ersten Kugelköpfe als einstückig mit dem doppelwandigen Konnektor auszubilden. Es besteht auch die Möglichkeit, die ersten Kugelköpfe als separate Bauteile auszuführen, die dann mit einem entsprechend konfigurierten doppelwandigen Konnektorkörper zu verbinden wären. Bei den ersten Kugelköpfen kann es sich auch um separate Bauteile handeln. Eine integrierte, d.h. einstückige Ausführung der Kugelköpfe hat Kostenvorteile, da eine Sicherung entfallen kann. Mit dem Einsatz lediglich einer zentrischen Dichtung kann auch verschleißfesteres Material eingespart werden. Zentrische Dichtungen erlauben eine relativ große Fertigungstoleranz, da eine axiale Verschiebung in geometrischer Hinsicht einen geringen Einfluss auf die Aufrechterhaltung der Dichtigkeit hat.

In Weiterbildung der erfindungsgemäß vorgeschlagenen Lösung sind die zweiten Kugelköpfe am Außenumfang des doppelwandigen Konnektors in Axialrichtung verstellbar angeordnet. Dabei können die zweiten Kugelköpfe hülsenförmige Ansätze aufweisen, die ein Innengewinde enthalten, welches mit einem am Außenumfang des doppelwandigen Konnektors angebrachten korrespondierenden Außengewinde zusammenwirkt, so dass eine Axialverstellung der zweiten Kugelköpfe relativ zum Konnektorkörper möglich ist.

In Weiterbildung der erfindungsgemäß vorgeschlagenen Lösung sind ein erster und ein zweiter Spannring am doppelwandigen Konnektor vormontiert, derart, dass der erste und der zweite Spannring die am Körper des doppelwandigen Konnektors angeordneten Kugelköpfe übergreifen.

Mit den Spannringen kann eine optimale axiale Vorspannung von Dichtelementen erreicht werden, während eine Zentrierung eines die zweiten Kugelköpfe übergreifenden Kugelkäfigs erfolgt.

In weiterer Ausgestaltung der erfindungsgemäß vorgeschlagenen Lösung können der erste und der zweite Spannring aus einem Material gefertigt werden, welches Gleiteigenschaften aufweist. Dies bietet den Vorteil, dass ein Dichtelement am Spannring eingespart werden kann. Es können verschiedene Kunststoffe verwendet werden, die gute Gleiteigenschaften bei chemischer Resistenz gegenüber Kraftstoff aufweisen. Als Beispiele seien PA66 oder PEEK genannt, auch eine Beschichtung des metallischen Spannringes mit PTFE (Teflon) oder ähnlichem Material ist möglich, um ein Dichtelement zu ersetzen.

In Weiterbildung der erfindungsgemäß vorgeschlagenen Lösung können der erste und der zweite Spannring in Umfangsrichtung geschlossen ausgeführt sein oder der erste und der zweite Spannring können zwei oder mehrere radial voneinander getrennte Segmente aufweisen. Ein Spannring, bestehend aus zwei oder mehreren radial getrennten Segmenten, kann auch nachträglich zum Kugelkopf an den Konnektor vormontiert werden. Ein geschlossener Spannring hat einen kleineren Innendurchmesser als der Außendurchmesser des äußeren Kugelkopfes und kommt aus diesem Grunde bevorzugt am Konnektor im Rahmen der Vormontage zum Systemeinbau.

In Weiterbildung der erfindungsgemäß vorgeschlagenen Lösung kann der doppelwandige Konnektor aus Aluminium, die zweiten Kugelköpfe aus Titan, der erste und der zweite Spannring sowie doppelwandige Anschlüsse aus PEEK gefertigt sein. Beim Auftritt einer Krafteinwirkung durch bei Flugzeugbeschleunigungen oder bei Flugzeugverformungen auf die Rohre einwirkende Kräfte, werden diese über die Oberfläche des äußeren Kugelkopfes zum Konnektor in die Flugzeugstruktur abgeleitet. Sind die in axiale Richtung auftretenden Kräfte an axialen Anschlägen sehr groß, so können die Dichtungen so weit beaufschlagt werden, dass der äußere Kugelkäfig den äußeren Kugelkopf berührt, ohne dass dies auch an den inneren Elementen der Fall sein müsste. Da die Oberfläche der Kugelköpfe auch der Dichtigkeit förderlich ist, darf hier kein Verschleiß und als Folge daraus auch keine Korrosion entstehen. Aus diesem Grunde werden die genannten Bauteile aus Titan oder rostfreiem Stahl gefertigt, da diese Materialien keine Beschichtung als Oberflächenschutz benötigen. Aus Gewichtsgründen ist der Einsatz von Titan von Vorteil.

In Weiterbildung der erfindungsgemäß vorgeschlagenen Lösung können die miteinander mittels des Konnektors zu verbindenden doppelwandigen Rohrenden mit doppelwandigen Anschlüssen versehen werden, die ein Außenteil und ein Innenteil umfassen.

Im Außenteil und im Innenteil sind jeweils ein erster und ein zweiter, die ersten und zweiten Kugelköpfe übergreifende Kugelkäfige ausgeführt.

In Weiterbildung der erfindungsgemäß vorgeschlagenen Lösung ist ein erster Kugelkäfig mit einem Dichtring im Innenteil ausgeführt während sich ein zweiter Kugelkäfig mit zwei Dichtringen oder einem Dichtring und einem Führungsring im Außenteil befindet. Der näher zum Konnektor liegende Dichtring übernimmt dabei die Funktion eines Führungsringes.

Darüber hinaus befindet sich am Außenumfang des Innenteils ein erster Führungsring und von diesem axial beabstandet ein weiterer Dichtring.

Im gefügten Zustand des Außenteiles und des Innenteiles eines doppelwandigen Anschlusses begrenzt eine am Innenteil angeordnete mit einer Vielzahl von Öffnungen versehene Lochscheibe einen Einschubraum für ein Doppelwandrohrende, wobei der Einschubraum zwischen der Innenwand des Außenteiles und der Außenwand des Innenteiles begrenzt ist.

In Weiterbildung der erfindungsgemäß vorgeschlagenen Lösung sind die zweiten Kugelkäfige zu den zweiten Kugelköpfen über einen Dichtring und einen Führungsring mit kleinerem Durchmesser als die zweiten Kugelköpfe, konzentrisch positioniert und verspannt. Aus dieser Konstellation ergibt sich in vorteilhafter Weise, dass die Einbaupositionen nicht kugelzentrisch sondern axial versetzt zueinander sind. Dadurch können die Dichtringe, die im äußeren Kugelkäfig oder im Spannring geführt sind, axial über den außen liegenden Kugelkopf hinweg gleiten und damit in jeder Winkelposition alle Axialkräfte übertragen. Gleichzeitig bleibt die Dichtfunktion aufrecht erhalten, da zwei axial verspannte Dichtringe auch die kugelkonzentrische Position des inneren Dichtringes erzwingen, da der innere Kugelkäfig fest mit dem äußeren Kugelkäfig verbunden ist und somit die primäre Dichtheit des Systems gegen Leckage gewährleistet ist. Treibstoff fließt nur im inneren primären Rohr, das äußere Rohr des mehrwandigen Rohrverbundes dient der Drainage und somit der Sicherheit.

In Weiterbildung der erfindungsgemäß vorgeschlagenen Lösung nehmen die ersten Kugelkäfige jeweils ein erstes Dichtelement auf, welches einen mit einem Durchmesser des ersten Kugelkopfes identischen Durchmesser aufweist. Durch dieses Dichtelement können Abweichungen hinsichtlich der Konzentrizität zwischen dem zweiten Kugelkopf zum ersten Kugelkopf ausgeglichen werden. In vorteilhafter Weise ergeben sich daraus nur geringe geometrische Auswirkungen und eine allenfalls geringfügige Beeinflussung der Dichtfunktion.

Die ersten und zweiten Spannringe spannen den Dichtring und den Führungsring in axiale Richtung vor und zentrieren die zweiten Kugelkäfige in Bezug auf die zweiten Kugelköpfe.

Die Erfindung bezieht sich weiterhin auf eine Verwendung der Vorrichtung zur Verbindung von Rohrenden doppelwandiger Rohren sowie zur Winkelkompensation und zur Längenkompensation in einem Luftfahrzeug, insbesondere zur Befestigung an Strukturbauteilen wie Tragflächen oder Rumpfabschnitten von Luftfahrzeugen seien es Passagierflugzeuge, seien es Frachtflugzeuge.

### Vorteile der Erfindung

Durch die erfindungsgemäß vorgeschlagenen doppelwandig ausgebildeten Konnektoren können mit doppelwandigen Anschlüssen versehene doppelwandige Rohrenden von doppelwandigen Rohren derart miteinander verbunden werden, dass eine maximale Winkelbeweglichkeit erreicht werden kann, wobei bevorzugt als Dichtringe ausgebildete Dichtungselemente einer immer konstanten gleichmäßigen Verformung unterliegen. Dies stellt eine Minimierung des Verschleißes über die Standzeit der doppelwandigen Konnektoren gesehen sicher. Darüber hinaus vermögen die erfindungsgemäß vorgeschlagenen doppelwandigen Konnektoren Axialbewegungen von Rohrenden relativ zu die Rohrenden umgebenden doppelwandigen Anschlüssen auszugleichen, wobei bei der Relativbewegung die Dichtfunktion erhalten bleibt und ein Fluidtransfer durch einen äußeren durch die Doppelwandung begrenzten zweiten Strömungsquerschnitt sichergestellt bleibt. Daneben bietet die erfindungsgemäß vorgeschlagene Lösung für doppelwandige Konnektoren den Vorteil, dass höhere Einzelteiltoleranzen zulässig sind sowie höhere Montagetoleranzen der kompletten Baueinheit beim Systembau im Flugzeug zugelassen werden können.

Die erfindungsgemäß vorgeschlagenen Konnektoren können ohne Vermessung ihrer Position und Ausrichtung an der Flugzeugstruktur endmontiert werden, die ihrerseits große Toleranzen aufweisen kann, ohne dass die Konnektorpositionen und Konnektorausrichtungen für die Systemmontage der zu verbindenden Rohre nochmals korrigiert werden müssten, um Winkel- oder Positionsgrenzwerte für die Dichtungen einzuhalten. Aufgrund dieser Eigenschaft ist die Systemmontage bei Einsatz der erfindungsgemäß vorgeschlagenen Vorrichtung bei der Endmontage von Flugzeugen erheblich vereinfacht.

### Zeichnungen

Anhand der Zeichnungen wird die Erfindung nachstehend eingehender beschrieben.

Es zeigt:
- Figur 1: einen Schnitt durch einen erfindungsgemäß vorgeschlagenen doppelwandigen Konnektor mit daran ausgebildeten ersten und zweiten Kugelsätzen,
- Figur 2: eine Ansicht des doppelwandigen Konnektors gemäß Figur 1 von der Unterseite her,
- Figur 3: eine perspektivische Draufsicht auf den erfindungsgemäß vorgeschlagenen doppelwandigen Konnektor in perspektivischer Wiedergabe,
- Figur 4: einen Schnitt durch einen doppelwandigen Anschluss,
- Figur 5: einen Schnitt durch ein Innenteil des doppelwandigen Anschlusses,
- Figur 6: eine perspektivische Darsicht des Innenteiles des doppelwandigen Konnektors mit am Außenumfang angebrachter, eine Vielzahl von Öffnungen aufweisender Lochscheibe,
- Figur 7: eine perspektivische Darstellung von doppelwandigen Rohren, die über doppelwandige Anschlüsse mit dem erfindungsgemäß vorgeschlagenen doppelwandigen Konnektor verbunden sind und in einer ausgelenkten Position wiedergegeben sind,
- Figur 8: ein Schnitt durch die gefügte Anordnung von doppelwandigen Rohren, doppelwandigen Anschlüssen und einem doppelwandigen Konnektor mit dargestellten Auslenkungen und Dichtelementen und
- Figur 9: ein Detail in vergrößerter Darstellung einer Verbindung zwischen dem doppelwandigen Konnektor und dem doppelwandigen Anschlussteil, in welchem ein Rohrende eines doppelwandigen Rohres aufgenommen ist.

### Ausführungsvarianten

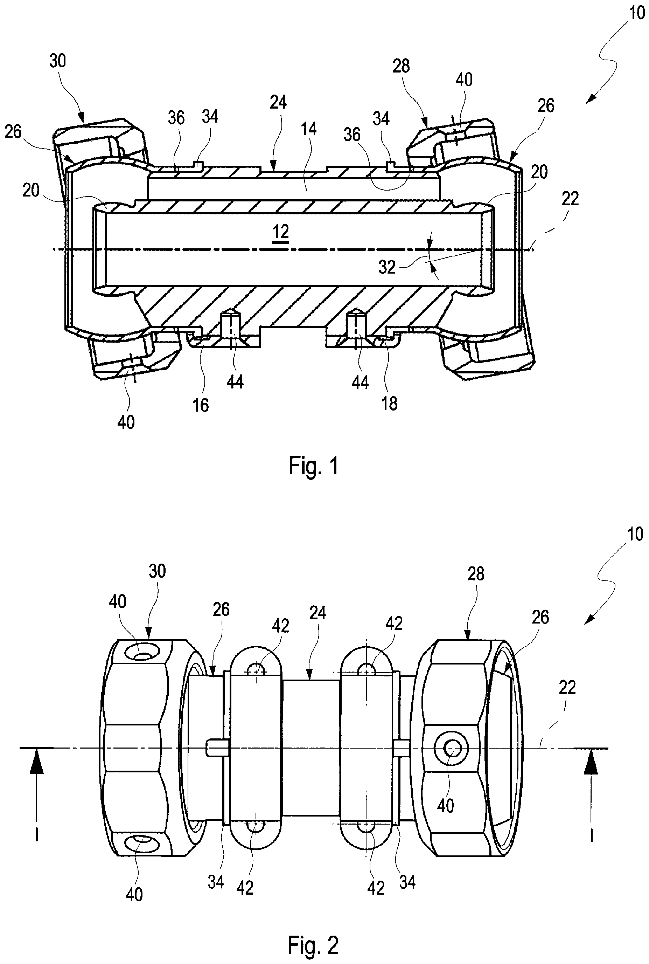

Der Darstellung gemäß Figur 1 ist ein Schnitt durch einen erfindungsgemäß vorgeschlagenen doppelwandigen Konnektor einer Vorrichtung zur Verbindung von Rohrenden doppelwandiger Rohre zu entnehmen.

Wie der Darstellung gemäß Figur 1 zu entnehmen ist, weist ein doppelwandiger Konnektor 10 einen ersten Strömungsquerschnitt 12 sowie einen weiteren, zweiten Strömungsquerschnitt 14 auf. Der weitere, zweite Strömungsquerschnitt 14 ist durch eine Vielzahl von Kanälen gegeben, die sich in Umfangsrichtung um eine Mittellinie 22 des doppelwandigen Konnektors 10 erstrecken. Dem in Figur 1 dargestellten zweiten Strömungsquerschnitt 14 liegt ein Befestigungsabschnitt 24 gegenüber, an dem ein Befestigungselement 16 und ein weiteres Befestigungselement 18 befestigt sind. Mithilfe der Befestigungselemente 16, 18, die untenstehend noch näher beschrieben werden, kann der doppelwandige Konnektor 10 an einer Struktur, beispielsweise im Innenraum einer Tragfläche oder einem Rumpfabschnitt eines Passagier- oder eines Frachtflugzeugs befestigt werden. Der in Figur 1 im Schnitt dargestellte doppelwandige Konnektor 10 ist beispielsweise aus Aluminium gefertigt.

Der doppelwandige Konnektor 10 enthält darüber hinaus erste Kugelköpfe 20. Die ersten Kugelköpfe 20, die einander gegenüberliegend ausgeführt sind, können beispielsweise in den Körper des doppelwandigen Konnektors 10 integriert, d.h. mit diesem einstückig ausgebildet sein; die ersten Kugelköpfe 20 können darüber hinaus auch als separate Bauteile gefertigt sein und nachträglich mit dem Körper des ersten doppelwandigen Konnektors 10 gefügt sein. Beide Ausführungsvarianten sind möglich.

Konzentrisch zur Mittellinie 22 des doppelwandigen Konnektors 10 und die ersten Kugelköpfe 20 übergreifend, sind zweite Kugelköpfe 26 ausgeführt. Diese weisen einen größeren Durchmesser als die ersten Kugelköpfe 20 auf und sind am Außenumfang des doppelwandigen Konnektors 10 angeordnet, bevorzugt über ein Gewinde mit diesem gefügt und demzufolge in axiale Richtung verstellbar. Die zweiten Kugelköpfe 26, die in Bezug auf den doppelwandigen Konnektor 10 ebenfalls einander gegenüberliegend angeordnet sind, umfassen hülsenförmige Ansätze, in denen ein Gewinde ausgeführt ist sowie einen rechteckförmig ausgebildeten Anschlag 34. Mittels einer Axialsicherung 36 sind die besagte Hülsenansätze aufweisenden zweiten Kugelköpfe 26 am Umfang des doppelwandigen Konnektors 10 gefügt.

Die zweiten Kugelköpfe 26 werden bevorzugt aus einem Material wie beispielsweise Titan gefertigt.

Wie der Schnittdarstellung gemäß Figur 1 des Weiteren entnommen werden kann, sind die beiden außenliegenden zweiten Kugelköpfe 26 jeweils von einem ersten Spannring 28 und einem zweiten Spannring 30 übergriffen. Diese werden aufgrund des Umstandes, dass der lichte Durchmesser der ersten und zweiten Spannringe 28, 30 geringer ist als der Außendurchmesser der zweiten Kugelköpfe 26, am doppelwandigen Konnektor 10 vormontiert, bevor die zweiten Kugelköpfe 26 am doppelwandigen Konnektor 10 montiert werden. Aus der Darstellung gemäß Figur 1 geht hervor, dass der erste Spannring 28 und der zweite Spannring 30 in Bezug auf die einander gegenüberliegenden zweiten Kugelköpfe 26 beweglich sind, d.h. relativ zu diesem bewegbar sind und dadurch um die zweiten Kugelköpfe 26 entsprechend eines durch das Bezugszeichen 32 bezeichneten ersten Winkelversatzes bewegbar sind. Der erste Winkelversatz 32 ist in der Schnittdarstellung gemäß Figur 1 in Bezug auf die Mittellinie 22 des doppelwandigen Konnektors 10 dargestellt.

Gemäß der Darstellung in Figur 2 ist der in Figur 1 im Schnitt dargestellte doppelwandige Konnektor in einer Draufsicht von oben wiedergegeben.

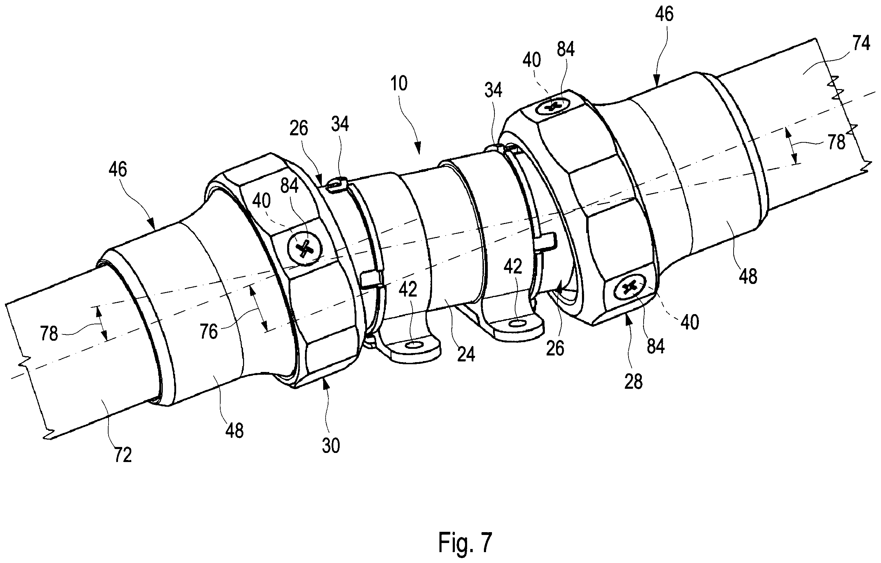

Aus der Draufsicht gemäß Figur 2 geht hervor, dass der Körper des doppelwandigen Konnektors 10 jeweils von den Befestigungselementen 16, 18 umschlossen ist. Die Befestigungsöffnungen 42 ermöglichen die Befestigung des doppelwandigen Konnektors 10 an einer Struktur beispielsweise im Innenraum einer Tragfläche oder im Innenraum eines Rumpfabschnittes eines Flugzeugs. Aus der Draufsicht gemäß der Darstellung in Figur 2 ergibt sich des Weiteren, dass der erste und der zweite Spannring 28, 30 jeweils Öffnungen 40 aufweisen. Die Öffnungen 40 dienen der Aufnahme von Sicherungen 84, vergleiche Figur 7. Bei den Öffnungen 40 handelt es sich um Bohrungen oder Senkungen, die der Aufnahme für Sicherungselemente 84 beispielsweise Senkschrauben dienen. Um eine einmal gewählte Gewindeeinstellung und damit eine Relativposition zwischen den Bauteilen zu sichern, werden die Bauteile 30 und 46 über drei Sicherungselemente, z.B. Sicherungssenkschrauben 84 radial verbunden. Dies dient insbesondere dazu, die axiale Position eines zweiten Führungsringes relativ zum zweiten außenliegenden Kugelkopf in einer Weise zu fixieren, dass eine optimale kugelzentrische Position aller Bauteile in Bezug aufeinander gewährleistet ist.

Aus der Draufsicht gemäß Figur 2 geht des Weiteren hervor, dass in dieser Ausführungsvariante die beiden Spannringe 28, 30, welche die zweiten Kugelköpfe 26 übergreifen, einstückig, d.h. geschlossen in Umfangsrichtung ausgeführt sind. Als Ausführungsvariante besteht die Möglichkeit, den ersten Spannring 28 sowie den zweiten Spannring 30 aus mindestens zwei oder auch mehreren Segmenten die in Radialrichtung voneinander getrennt sind, auszuführen.

Der Draufsicht gemäß Figur 2 ist entnehmbar, dass sich am Umfang des doppelwandigen Konnektors 10 die beiden einen Hülsenansatz aufweisenden zweiten Kugelköpfe 26 einander gegenüberliegend befinden.

Während der doppelwandige Konnektor 10 bevorzugt aus einem Material wie Aluminium gefertigt ist, können die zweiten Kugelköpfe 26 mit ihren jeweiligen Hülsenansätzen aus Titan gefertigt sein. Als Werkstoff zur Fertigung des ersten Spannrings 28 sowie des zweiten Spannrings 30 wird bevorzugt ein Material wie PEEK gewählt. Das Material wie beispielsweise PEEK hat auch die Funktion einer definierten hochohmigen elektrischen Leitfähigkeit, um eine möglicherweise auftretende elektrostatische Aufladung der Rohrenden kontrolliert ableiten zu können. Zu diesem Zwecke sind die Rohre bzw. Rohrenden mit Kugelhülsen über ein Bondingkabel verbunden, welches nicht dargestellt ist. Die Funktion der Ableitung könnte auch über ein gewickeltes Glasfasermaterial mit beispielsweise einem Rußzusatz in dessen Matrix erreicht werden. Aus der Darstellung gemäß Figur 2 ergibt sich des Weiteren, dass die Anschläge 34 der Hülsenansätze der zweiten Kugelköpfe 26 an den sich in Umfangsrichtung über den Körper des doppelwandigen Konnektors 10 erstreckenden Befestigungselementen 16, 18 anliegen.

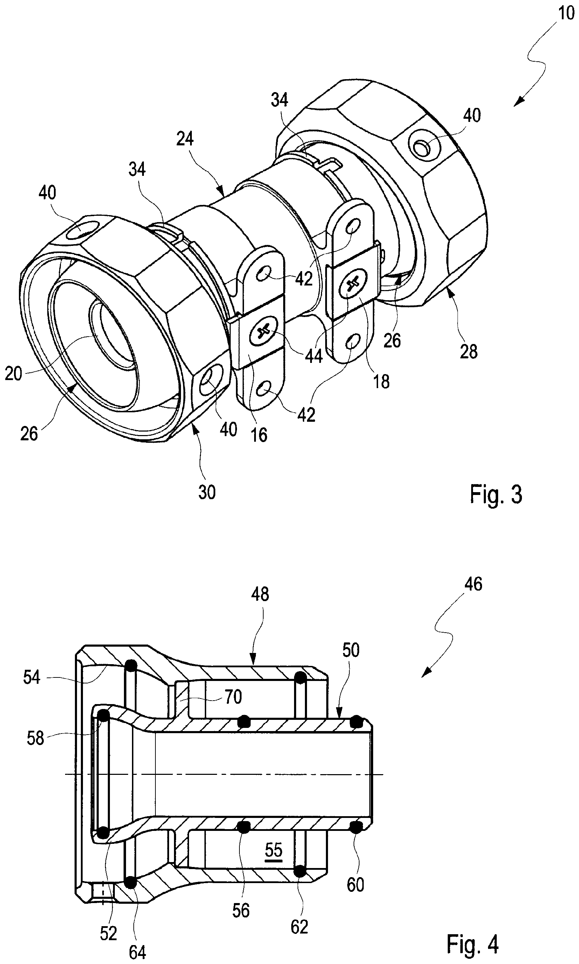

Figur 3 zeigt eine perspektivische Ansicht des doppelwandigen Konnektors von der Unterseite her.

Aus Figur 3 lässt sich entnehmen, dass die Befestigungselemente 16, 18 über Fixierschrauben 44, die in den Befestigungsabschnitt 24 des doppelwandigen Konnektors 10 eingeschraubt sind, mit diesem verbunden werden. Der doppelwandige Konnektor 10 an sich wird über die in der Ansicht gemäß Figur 3 dargestellten Befestigungsöffnungen 42 mit einer in Figur 3 nicht dargestellten Struktur, beispielsweise einer Tragfläche oder einem Rumpfabschnitt eines Flugzeugs, verbunden. Mithin ist der doppelwandige Konnektor 10 starr mit der Struktur verbunden, während die Spannringe 28, 30 und mit diesen verbundene Komponenten relativ zum doppelwandigen Konnektor 10 bewegbar bleiben. Auch aus der perspektivischen Darstellung gemäß Figur 3 ergibt sich, dass die zweiten Kugelköpfe 26 jeweils vom ersten Spannring 28 und vom zweiten Spannring 30 übergriffen sind.

In der Darstellung gemäß Figur 4 sind ein doppelwandiger Anschluss, ein Außenteil und ein mit diesem gefügtes Innenteil umfassend im Schnitt dargestellt.

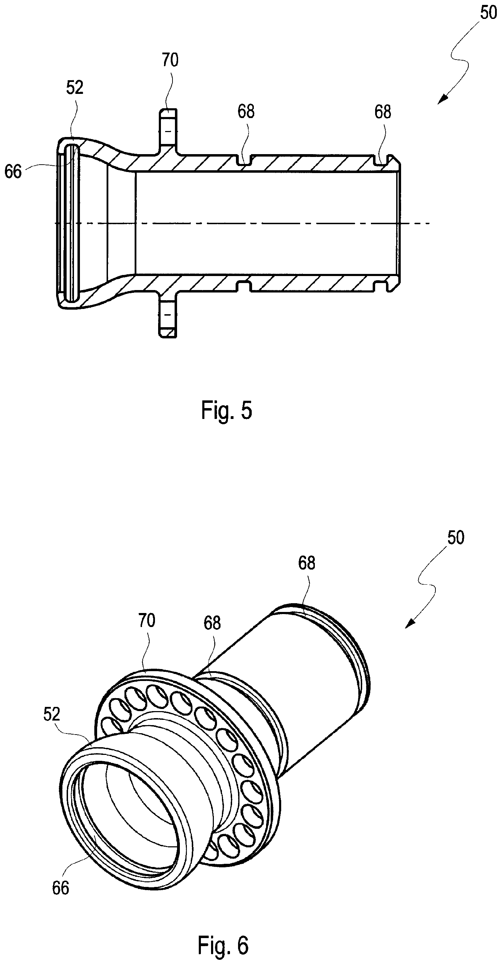

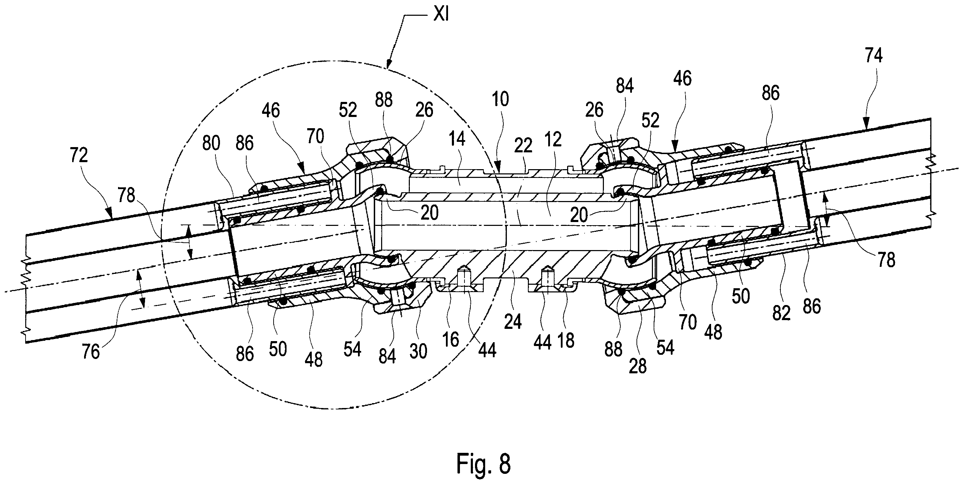

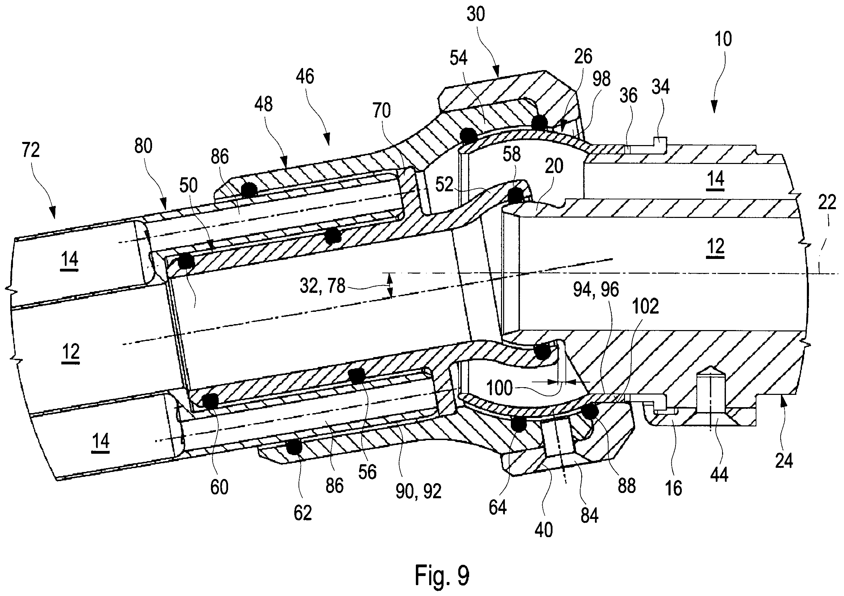

Aus der Darstellung gemäß Figur 4 ergibt sich, dass ein doppelwandiger Anschluss 46, ein Außenteil 48 und ein mit diesem gefügtes rohrförmiges Innenteil 50 umfasst. Im Innenteil 50 ist ein erster Kugelkäfig 52 ausgeführt. Im Außenteil 48 des doppelwandigen Anschlusses 46 ist ein zweiter Kugelkäfig 54 ausgeführt, der den ersten Kugelkäfig 52 umschließt. In der Darstellung gemäß Figur 4 sind das Außenteil 48 und das Innenteil 50 im gefügten Zustand dargestellt. In miteinander gefügten Zustand gemäß Figur 4 wird ein Einschubraum 55 durch das Außenteil 48, den Außenumfang des Innenteiles 50 sowie eine Lochscheibe 70 begrenzt. Eine Seite des Einschubraumes 55 ist zur Aufnahme eines in Figur 4 nicht dargestellten Doppelwandrohrendes 80, 82 (vergleiche Figuren 8 und9) offen. Aus der Schnittdarstellung gemäß Figur 5 ergibt sich, dass der erste Kugelkäfig 52 einen ersten Dichtring 58 aufnimmt. Des Weiteren ist am Außenumfang des Innenteiles 50 ein zweiter Dichtring 60 angeordnet. Axial beabstandet von diesem befindet sich ein erster Führungsring 56, der ebenfalls am Innenteil 50 angeordnet ist.

Im Außenteil 48 bzw. an dessen Innenseite befindet sich innerhalb des zweiten Kugelkäfigs 54 ein vierter Dichtring 64 wohingegen im Bereich des Einschubraumes 55 ein dritter Dichtring 62 innenliegend an der Innenseite des Außenteiles 48 angeordnet ist.

Figur 5 zeigt eine Schnittdarstellung des Innenteiles 50 des doppelwandigen Anschlusses.

Aus der Schnittdarstellung gemäß Figur 5 geht hervor, dass zur Aufnahme der Dicht- bzw. Führungselemente 56, 60 am Außenumfang des Innenteiles 50 mehrere Nuten 68 ausgeführt sind. In eine Nut 66 an der Innenseite des ersten Kugelkäfigs 52 wird der erste Dichtring 58 eingelegt. Am Außenumfang des Innenteiles 50 befindet sich gemäß Figur 5 eine Lochscheibe 70, die in Umfangsrichtung gesehen mehrere nebeneinanderliegende Öffnungen 70 aufweist.

Figur 6 zeigt eine perspektivische Ansicht des in Figur 5 im Schnitt dargestellten Innenteiles des doppelwandigen Anschlusses.

Aus der perspektivischen Wiedergabe gemäß Figur 6 geht hervor, dass an der Innenseite des ersten Kugelkäfigs 52 die umlaufende Nut 66 zur Aufnahme des ersten Dichtrings 58 verläuft. Die sich am Außenumfang des Innenteiles 50 befindende Lochscheibe 70 weist in Umfangsrichtung gesehen mehrere Bohrungen auf, welche einen Fluidtransfer in einem zweiten Strömungsquerschnitt 14, die einen ersten Strömungsquerschnitt 12 im doppelwandigen Konnektor 10 umschließt, ermöglichen. Aus der perspektivischen Darstellung gemäß Figur 6 geht des Weiteren hervor, dass sich an dem Innenteil 50 die Nuten 68 zur Aufnahme des zweiten Dichtringes 60 und des ersten Führungsringes 56 befinden.

Figur 7 zeigt eine perspektivische Darstellung eines Verbundes aus doppelwandigem Konnektor, zwei doppelwandigen Anschlüssen und zwei in diesem aufgenommener doppelwandiger Rohre.

Der doppelwandige Konnektor 10, der in der Darstellung gemäß Figur 7 mit einer hier nicht dargestellten Struktur, beispielsweise einem Tragflächeninnenraum oder einem Innenraum eines Rumpfabschnittes eines Flugzeugs, verbunden ist, stellt eine starre Komponente des in Figur 7 in ausgelenkter Lage dargestellten Verbundes dar. Die doppelwandig ausgeführten Anschlüsse 46 sind in ausgelenkter Lage dargestellt und weisen einen Winkelversatz 78 in Bezug auf den starr angeordneten doppelwandigen Konnektor 10 des in Figur 7 dargestellten Verbundes auf. Die doppelwandigen Anschlüsse 46 umschließen ihrerseits ein erstes doppelwandiges Rohr 72 und ein zweites doppelwandiges Rohr 74, genauer gesagt deren Doppelwandrohrenden 80, 82 (vergleiche Darstellungen gemäß der Figuren 8 und9).

Am Umfang des doppelwandigen Konnektors 10 befinden sich die Hülsenansätze der beiden zweiten Kugelköpfe 26 jeweils mit ihren Anschlägen 34 anliegend an den Befestigungselementen 16 des doppelwandigen Konnektors 10 zur in Figur 7 nicht dargestellten Struktur. Neben dem Winkelversatz 78 der doppelwandigen Rohre 72, 74 relativ zum doppelwandigen Konnektor 10, weisen die beiden doppelwandigen Rohre 72 einen Leitungsversatz 76 relativ zueinander auf. In der Darstellung gemäß Figur 9 sind die Winkelversätze 78 gegenläufig zueinander orientiert.

Zur Zentrierung des zweiten Kugelkäfigs 54 zum zweiten Kugelkopf 26 ist bei der Montage des zweiten Kugelkopfes 26 am doppelwandigen Konnektor 10 ein Spannring 28, 30 zwischen dem zweiten Kugelkopf 26 und dem doppelwandigen Konnektor 10 vorzumontieren, da der kleinste lichte innere Durchmesser der ersten und zweiten Spannringe 28, 30 für ihre Funktion der axialen Vorspannung der beiden Dicht- bzw. Führungsringe 64, 88, kleiner sein muss als der größte äußere Durchmesser des zweiten Kugelkopfes 26. Die ersten und zweiten Spannringe 28, 30, zwei oder mehrere radial getrennte Segmente enthaltend, können auch nachträglich an den doppelwandigen Konnektor 10 vormontiert werden. Die Anzahl der Segmente ergibt jedoch ein entsprechend erhöhtes Ausfallrisiko verglichen mit dem Ausfallrisiko was eingeschlossen als gestalteter Spannring 28, 30 aufweist.

Die Positionierung des ersten Kugelkäfigs 52 in Bezug auf den ersten Kugelkopf 20 am doppelwandigen Konnektor 10 sorgt durch feste Verbindung oder Integration des inneren Winkelarms zum äußeren Winkelarm, der sich selbst mit dem zweiten Kugelkäfig 54 mit den darin aufgenommenen zwei axial zueinander verspannten Dicht- bzw. Führungsringen 64, 88 zum zweiten Kugelkopf 26 zentriert. Da der zweite Kugelkopf 26 axial einstellbar zum ersten Kugelkopf 20 konzentrisch positioniert ist, gilt dies gleichermaßen für alle anderen Elemente des Winkelausgleiches über die ersten und zweiten Kugelkäfige 52, 54 und den erwähnten Dichtringen 58, 60, 62, 64. Die erfindungsgemäße Lösung ermöglicht eine Biegemomentübertragung von doppelwandigen Rohren 72, 74 zum doppelwandigen Konnektor 10 über mehrere einen Axialversatz aufweisende Dichtringe 58, 60, 62, 64, die darüber hinaus einen abgedichteten Längenausgleich über einen axialen Freiraum mit Anschlag für das Ende des Rohres im Winkelraum ermöglichen.

Eine Sicherung des zweiten Kugelkopfes 26 in Bezug zum doppelwandigen Konnektor 10 erfolgt durch ein oder mehrere axialverbindende Sicherungselemente, die in den Körper des doppelwandigen Konnektors 10 montiert sind. Eine Sicherung der ersten und zweiten Spannringe 28, 30 an den doppelwandigen Anschlüssen 46 erfolgt durch ein oder mehrere radialverbindende Sicherungselemente 84.

Mittels eines axialen Gewindes werden der zweite Spannring 30 und der doppelwandige Anschluss 46 relativ zueinander positioniert. Um die gewählte Gewindeeinstellung zu sichern, werden der zweite Spannring 30 und der doppelwandige Anschluss 46 über drei Sicherungen 84, beispielsweise Senkschrauben, radial verbunden. Diese Art der Sicherung dient insbesondere dazu, die axiale Position des zweiten Führungsringes 88 in Bezug auf den zweiten Kugelkopf 26 derart zu fixieren, dass die optimale konzentrische Position aller Einzelteile zueinander erzwungen wird, ohne die zulässigen Presskräfte der Dichtungen zu überschreiten.

Der Darstellung gemäß Figur 8 ist ein Schnitt durch den in Figur 7 in perspektivischer Darstellung gezeigten Verbund aus doppelwandigem Konnektor und zwei Rohrenden doppelwandiger Rohre, die jeweils mit einem doppelwandigen Anschluss versehen sind, zu entnehmen.

Figur 8 zeigt, dass der doppelwandige Konnektor 10 den ersten Strömungsquerschnitt 12 aufweist, der rohrförmig ausgebildet ist und symmetrisch zur Mittellinie 22 verläuft. Der erste Strömungsquerschnitt 12 ist vom zweiten Strömungsquerschnitt 14 umschlossen, der - wenn auch in Figur 8 nicht dargestellt - sich in Umfangsrichtung im Körper des doppelwandigen Konnektors 10 erstreckt. Am Außenumfang des doppelwandigen Konnektors 10 befinden sich die beiden Befestigungselemente 16, 18, jeweils versehen mit Fixierschrauben 44, mit denen der doppelwandige Konnektor 10 starr mit Strukturkomponenten wie beispielsweise einer Tragfläche oder einem Rumpfabschnitt eines Flugzeugs verbunden werden kann.

Aus der Darstellung gemäß Figur 8 geht hervor, dass die ersten Kugelköpfe 20 jeweils von ersten Kugelkäfigen 52 übergriffen sind. An der inneren Seite der ersten Kugelkäfige 52 befindet sich der erste Dichtring 58, mit dem die gelenkartige Verbindung zwischen den ersten Kugelköpfen 20 und den Innenteilen 50 der doppelwandigen Anschlüsse 46 abgedichtet ist. Aus der Darstellung gemäß Figur 8 geht hervor, dass sich die doppelwandigen Rohrenden 80 bzw. 82 in einem Winkelversatz 78, bezogen auf die Mittellinie 22 des ersten Strömungsquerschnittes 12, befinden.

Die Außenteile 48 der doppelwandigen Anschlüsse 46 sind durch die jeweils den ersten Spannring 28 bzw. den zweiten Spannring 30 vorgespannt. Ein zweiter Führungsring 88 sowie der vierte Dichtring 64 zentrieren das durch die ersten und zweiten Spannringe 28, 30 vorgespannte Außenteil 48 mit dem zweiten Kugelkäfig 54 auf den zweiten Kugelköpfen 26.

Aus der Schnittdarstellung gemäß Figur 8 geht ferner hervor, dass doppelwandige Rohre 72, 74 jeweils mit ihren doppelwandigen Rohrenden 80 bzw. 82 in die miteinander gefügten Außenteile 48 und Innenteile 50 der doppelwandigen Anschlüsse 46 eingesteckt sind. In den doppelwandigen Rohrenden 80 bzw. 82 verlaufen jeweils eine Anzahl von Kanälen 86, die eine Art Kanalbündel bilden. Die Öffnungen der Kanäle 86 fluchten mit den Öffnungen der Lochscheibe 70, die an dem Innenteil 50 des doppelwandigen Anschlusses 46 ausgeführt ist, so dass eine Fluidpassage durch die Verbindung zwischen dem doppelwandigen Anschluss 46 und den beiden Strömungsquerschnitten 12 bzw. 14 des doppelwandigen Konnektors 10 gewährleistet ist, der durch die Abdichtelemente in Gestalt besagter Dichtringe nach außen abgedichtet ist.

Der in der Darstellung gemäß Figur 8 angegebene Winkelversatz 78 kann in beide Richtungen ± 8° betragen, ohne dass die Dichtigkeit der Fluidverbindung zwischen dem doppelwandigen Konnektor 10 und den beiden doppelwandigen Anschlüssen 46 und den daran doppelwandigen Rohrenden 80, 82 eine Leckage aufweist.

Der Darstellung gemäß Figur 9 ist in vergrößertem Maßstab die dichtende Verbindung zwischen dem doppelwandigen Konnektor 10 und dem ersten doppelwandigen Rohrende 80 des ersten doppelwandigen Rohres 72 zu entnehmen.

Figur 9 zeigt, dass das erste doppelwandige Rohr 72 im Bereich seines ersten doppelwandigen Rohrendes 80 eine Anzahl von Kanälen 86 umfasst. Diese Kanäle 86 am ersten doppelwandigen Rohrende 80 sind in den in Figur 4 dargestellten Einschubraum 55 des doppelwandigen Anschlusses 46 eingeschoben. Der erste Führungsring 56 dient der Führung des Rohrendes des ersten doppelwandigen Rohrendes 80 am Außenumfang des Innenteiles 50, während der zweite Dichtring 60 Dichtfunktion übernimmt. Figur 9 zeigt, dass im gefügten Zustand das erste doppelwandige Rohrende 80 vom Außenteil 48 des doppelwandigen Anschlusses 46 übergriffen ist. Die Abdichtung zwischen diesen Komponenten erfolgt durch einen dritten Dichtring 62. In Figur 9 ist die Verbindung zwischen dem doppelwandigen Konnektor 10 und seinen daran ausgebildeten ersten und zweiten Kugelköpfen 20, 26 im ausgelenkten Zustand dargestellt, vergleiche Positionen 32, 78 in Bezug auf die Mittellinie 22 des doppelwandigen Konnektors 10. In der in Figur 9 dargestellten ausgelenkten Lage werden die Abdichtung und die Zentrierung durch den ersten Dichtring 58, der sich an der Innenseite des ersten Kugelkäfigs 52 befindet, übernommen. Die Dichtfunktion in Bezug auf den zweiten Kugelkäfig 54 wird durch den auf dem zweiten Kugelkopf 26 ablaufenden und relativ zu diesem bewegbaren vierten Dichtring 64 übernommen, während der zweite Führungsring 88 zwischen dem zweiten Spannring 30 und dem Außenteil 48 des doppelwandigen Anschlusses 46 nur eine Führungsfunktion übernimmt.

Am Außenumfang des doppelwandigen Konnektors 10 ist der zweite Kugelkopf 26, mit einem hülsenartigen Ansatz versehen, aufgenommen. In der in Figur 9 dargestellten Axialposition des zweiten Kugelkopfes 26 liegt der Anschlag 34 an dem Befestigungselement 16 an, das sich entlang des Außenumfangs des Körpers des doppelwandigen Konnektors 10 erstreckt. Das Befestigungselement 16, mit dem der doppelwandige Konnektor 10 starr an einer Struktur wie einer Tragfläche oder einem Rumpfabschnitt eines Flugzeugs befestigt werden kann, ist mit Fixierschrauben 44 mit dem Befestigungsabschnitt 24 des doppelwandigen Konnektors 10 verbunden.

Eine Axialverstellung der zweiten Kugelköpfe 26 relativ zum Konnektor 10 erfolgt mittels eines Außengewindes 94, welches am doppelwandigen Konnektor 10 ausgeführt ist und einem Innengewinde 96, mit welchem der Hülsenansatz des zweiten Kugelkopfes 26 versehen ist. Bevorzugt sind das Außengewinde 94 und das Innengewinde 96 als Feingewinde ausgeführt. Eine Verstellung des Außengewindes 94 relativ zum Innengewinde 96 erfolgt über Hakenschlüssel und Ausbuchtungen 34. Aus der Schnittdarstellung gemäß Figur 9 geht die als Senkschraube ausgeführte Sicherung 84 hervor, die in den zweiten Spannring 30 eingelassen ist. An diesem können die als Senkschrauben ausgebildeten Sicherungen 84 paarweise oder jeweils als drei Stück angeordnet werden. Die Ausführung gemäß Figur 9 ermöglicht die Einsparung von Bauraum, um die Winkelbeweglichkeit des Systems nicht einzuschränken und die Baugröße sowie die Verletzungsgefahr durch vorstehende Schraubenköpfe möglichst klein zu halten.

Der Darstellung gemäß Figur 9 ist darüber hinaus zu entnehmen, dass das erste doppelwandige Rohrende 80 und das Außenteil 48 des doppelwandigen Anschlusses 46 über eine schwimmende Lagerung 90, 92 miteinander gefügt sind. Die Lagerung eines doppelwandigen Rohres erfolgt axial schwimmend zwischen zwei doppelwandigen Konnektoren 10. An der Kontaktstelle zwischen einem ersten doppelwandigen Rohrende 80 an einem doppelwandigen Konnektor 10 gleitet das erste doppelwandige Rohrende 80 radial geführt mittels der Dichtungen 58, 60 und 62. Als Anschlag dient die Lochscheibe 70. Für diese axial schwimmende Lagerung 90, 92 werden bevorzugt drei Dichtungen eingesetzt, um das Biegemoment zu übertragen und damit das erste doppelwandige Rohrende 80 vor Abknicken zu schützen.

Der Schnittdarstellung gemäß Figur 9 ist zu entnehmen, dass der dort dargestellte zweite Spannring 30 eine umlaufende Anschlagfläche 98 für einen Winkelanschlag bei maximaler Winkelauslenkung umfasst. Bei dieser ergibt sich auf der gegenüberliegenden Seite, in Figur 9 durch Bezugszeichen 100 bezeichnet, ein Abstand zwischen dem ersten Kugelkopf 20 und dem doppelwandigen Konnektor. Der zweite Spannring 30 schlägt bei Position 102 am Winkelanschlag am zweiten Kugelkopf 26 an, bzw. an dessen Hülsenansatz, wodurch die maximale Auslenkung der Anordnung definiert und begrenzt ist.

Wie vorstehend anhand der Figuren dargelegt, kann durch die erfindungsgemäß vorgeschlagene Lösung mithilfe der fluiddichten Verbindung zwischen den Kugelköpfen 20, 26 und den Kugelkäfigen 52, 54 ein Winkelausgleich in allen Ebenen für doppelwandige Konnektoren 10 mit stets konstanter gleichmäßiger Verformung von Dichtringen 58, 60, 62, 64 bei minimaler und maximaler Winkelbeweglichkeit von ± 8° sowie für höhere Einzelteiltoleranzen und Montagetoleranzen des kompletten Verbundes erreicht werden. Dies wird dadurch unterstützt, dass die besagten Dichtringe 58, 60, 62, 64 zwischen zwei Paaren von Kugelköpfen 20, 26 und Kugelkäfigen 52, 54 positioniert sind, die alle zueinander konzentrisch angeordnet sind.

Die beiden Dicht- bzw. Führungsringe 64, 88, die in kleinerem Durchmesser als die zweiten Kugelköpfe 26 ausgebildet sind und zu diesen in axialem Abstand zueinander positioniert werden, werden bei der Montage axial zueinander durch Reduzierung ihres Abstandes verspannt und bewirken die konzentrische Positionierung des zweiten Kugelkäfigs 54 in Bezug auf den zweiten Kugelkopf 26. Der zweite Führungsring 88 hat in diesem Falle keine Dichtfunktion. Der zweite Führungsring 88 könnte auch entfallen, sofern die beiden Spannringe 28 bzw. 30 aus einem Material mit Gleiteigenschaften gefertigt werden.

Der erste Dichtring 58 ist im identischen Durchmesser wie die ersten Kugelköpfe 20 ausgeführt und zu diesem axial zentriert, so dass eine optimale Dichtigkeit bei maximaler Einzeltoleranz und maximaler Montagetoleranz bei einem Winkelausgleich bei Abweichungen der Konzentrizität der ersten und zweiten Kugelköpfe 20, 26 in Bezug zueinander gewährleistet ist. Eine sich ergebende axiale Abweichung der Konzentrizität zwischen dem ersten Kugelkäfig 52 in Bezug auf den ersten Kugelkopf 20 hat bei dieser Anordnung des ersten Dichtringes 58 nur eine geometrische Auswirkung auf den funktionalen Abstand der Dichtungsflächen und beeinflusst die Dichtfunktion nur unerheblich.

Es ist darauf hinzuweisen, dass der zweite Kugelkopf 26 zum doppelwandigen Konnektor 10 axial einstellbar über eine Gewindeanordnung 94, 96 ist und so die optimale Zentrierung in Bezug auf den ersten Kugelkopf 20 ermöglicht. In der zeichnerischen Darstellung ist die Einstellung des zweiten Kugelkopfes 26 zum doppelwandigen Konnektor 10 in einer Endposition des axialen Anschlages zwischen dem zweiten Spannring 30 und dem zweiten Kugelkopf 26 dargestellt. Aufgrund der Darstellung in der Endposition ist die Möglichkeit der Einstellung schwer erkennbar, im dargestellten Fall lässt sich die Einstellung lediglich in eine Richtung erweitern, jedoch nicht verengen. Dieser kann entweder in den doppelwandigen Konnektor 10 unmittelbar integriert, d.h. an diesem ausgeführt sein oder als ein separates Bauteil mit diesem gefügt werden. Der zweite Kugelkopf kann mit einer oder mehreren radial verteilten Aussparungen versehen sein zur Übertragung des Anzugsmomentes bei minimalem Bauraum.

Der zweite Kugelkäfig 54 ist in einer schwimmenden Lagerung 90, 92 relativ zu den Spannringen 28, 30 axial beweglich. Dadurch ist eine optimale axiale Vorspannung der beiden äußeren Dicht- bzw. Führungsringe 64, 88 bei der Zentrierung des zweiten Kugelkäfigs 54 zum zweiten Kugelkopf 26 gegeben. Die ersten und zweiten Spannringe 28, 30 zur optimalen axialen Vorspannung der beiden äußeren Dicht- bzw. Führungsringe 64, 88, zur Zentrierung des zweiten Kugelkäfigs 54 zum zweiten Kugelkopf 26 sind als Einzelteile bei der Montage des zweiten Kugelkopfes 26 am doppelwandigen Konnektor 10 zwischen dem zweiten Kugelkopf 26 und dem doppelwandigen Konnektor 10 vorzumontieren, da der kleinste lichte innere Durchmesser der ersten und zweiten Spannringe 28, 30 für ihre Funktion der axialen Vorspannung der beiden Dicht- bzw. Führungsringe 64, 88, kleiner sein muss als der größte äußere Durchmesser des zweiten Kugelkopfes 26. Die ersten und zweiten Spannringe 28, 30, zwei oder mehrere radial getrennte Segmente enthaltend, können auch nachträglich an den doppelwandigen Konnektor 10 vormontiert werden. Die Anzahl der Segmente ergibt jedoch ein entsprechend erhöhtes Ausfallrisiko verglichen mit dem Ausfallrisiko, was ein geschlossen ausgestalteter Spannring 28, 30 aufweist.

Die Positionierung des ersten Kugelkäfigs 52 in Bezug auf den ersten Kugelkopf 20 am doppelwandigen Konnektor 10 erfolgt durch feste Verbindung oder Integration eines inneren Winkelarms relativ zu einem äußeren Winkelarm, der sich selbst mit dem zweiten Kugelkäfig 54 mit den darin aufgenommenen zwei axial zueinander verspannten Dicht- bzw. Führungsringen 64, 88 zum zweiten Kugelkopf 26 zentriert. Unter dem Ausdruck "Winkelarm" ist die Kombination, umfassend einen ersten Kugelkopf 20, einen zweiten Kugelkopf 26 samt Spannringen 28, 30 und den Sicherungen 84 sowie sämtlicher Dichtringe bzw. Führungsringe 58, 64, 56, 62 und 60 zu verstehen. Unter Winkelarm ist demzufolge die Anzahl der Bauteile zu verstehen, die sich bei einer Winkelbewegung eines doppelwandigen Rohres 72, 74 mitbewegt, sich jedoch axial bei einer Bewegung der Rohrenden 80, 82 nicht mitbewegt. Da der zweite Kugelkopf 26 axial einstellbar zum ersten Kugelkopf 20 konzentrisch positioniert ist, gilt dies gleichermaßen für alle anderen Elemente des doppelwandigen Winkelausgleiches über die ersten und zweiten Kugelkäfige 52, 54 und den erwähnten Dichtringen 58, 60, 62, 64. Die erfindungsgemäße Lösung ermöglicht eine Biegemomentübertragung von doppelwandigen Rohren 72, 74 zum doppelwandigen Konnektor 10 über mehrere einen Axialversatz aufweisende Dichtringe 58, 60, 62, 64, die ebenso einen abgedichteten Längenausgleich über einen axialen Freiraum mit Anschlag für das Ende des Rohres im Winkelarm ermöglichen. Der abgedichtete Längenausgleich erfolgt aufgrund der schwimmenden Lagerung 90, 92 zwischen einem doppelwandigen Rohrende 80 und einem entsprechenden, doppelwandig ausgebildeten Anschluss 46. Hier übernehmen die Dichtringe 58, 60, 62, 64, die in Bezug aufeinander einen Axialversatz aufweisen, die Dichtung während sich die benannten Bauteile relativ zueinander bewegen können.

Eine Sicherung des zweiten Kugelkopfes 26 in Bezug zum doppelwandigen Konnektor 10, erfolgt durch ein oder mehrere Sicherungselemente (beispielsweise eine oder mehrere Fixierschrauben 44), die in den Körper des doppelwandigen Konnektors 10 montiert sind. Eine Sicherung der ersten und zweiten Spannringe 28, 30 an den doppelwandigen Anschlüssen 46 erfolgt durch ein oder mehrere radiale Sicherungselemente 84, z.B. ausgeführt als Senkschrauben. Die beispielsweise als Senkschrauben ausgeführten Sicherungen 84 sichern die Spannringe 28, 30 relativ zu den doppelwandigen Anschlüssen 46. Der erste Spannring 28 und der diesem zugeordnete doppelwandige Anschluss 46 sowie der zweite Spannring 30 und der diesem zugeordnete doppelwandige Anschluss 46 sind miteinander über die Feingewinde 94, 96 verbunden. Die bevorzugt als Senkschrauben ausgebildeten Sicherungen 84 verhindern eine Verstellung der Innen-/Außengewinde 94, 96 relativ zu einander, welche die axiale Vorspannung des außenliegenden vierten Dichtrings 64 und des zweiten Führungsrings 88 in Bezug auf den außenliegenden zweiten Kugelkopf 26 bestimmt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezuqszeichenliste

- 10: doppelwandiger Konnektor
- 12: erster Strömungsquerschnitt
- 14: zweiter Strömungsquerschnitt
- 16: Befestigungselement
- 18: weiteres Befestigungselement
- 20: erster Kugelkopf (innen)
- 22: Mittellinie
- 24: Befestigungsabschnitt für 16, 18
- 26: zweiter Kugelkopf (außen)
- 28: erster Spannring
- 30: zweiter Spannring
- 32: 1. Winkelversatz
- 34: Anschlag
- 36: Axialsicherung (Befestigungselement 16, Fixierschraube 44)
- 38 40: Öffnung
- 42: Befestigungsöffnung für Befestigung an Strukturkomponente
- 44: Fixierschraube
- 46: doppelwandiger Anschluss
- 48: Außenteil
- 50: Innenteil
- 52: erster Kugelkäfig (innen)
- 54: zweiter Kugelkäfig (außen)
- 55: Einschubraum
- 56: erster Führungsring
- 58: erster Dichtring
- 60: zweiter Dichtring
- 62: dritter Dichtring
- 64: vierter Dichtring
- 66: Nut im ersten Kugelkäfig 52
- 68: Nuten für Dichtringe
- 70: Lochscheibe
- 72: erstes doppelwandiges Rohr
- 74: zweites doppelwandiges Rohr
- 76: Leitungsversatz
- 78: 2. Winkelversatz/ Auslenkung (doppelt mit 32)
- 80: erstes doppelwandiges Rohrende
- 82: zweites doppelwandiges Rohrende
- 84: Sicherung (Senkschraube)
- 86: Kanal-Bündel (mit Lochscheibe 70 fluchtend)
- 88: zweiter Führungsring
- 90: 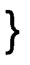 schwimmende Verbindung zwischen doppelwandigem Rohrende 80,
- 92: 82 und doppelwandigem Anschluss 46

- 94: Außengewinde doppelwandiger Konnektor 10 (Feingewinde)
- 96: Innengewinde zweiter Kugelkopf 26, Hülsenansatz (Feingewinde)
- 98: umlaufende Anschlagfläche des Spannrings für Winkelanschlag
- 100: Abstand zwischen erstem Kugelkopf 20 und doppelwandigen Konnektor 10
- 102: Winkelanschlag des Spannrings 30

## Patentansprüche

1. Vorrichtung mit einem doppelwandigen Konnektor (10) und doppelwandigen Anschlüssen (46) zur Verbindung von Rohrenden (80, 82) doppelwandiger Rohre (72, 74) zur Winkelkompensation und zur Längenkompensation bei Relativbewegungen der Rohre (72, 74) relativ zu dem doppelwandigem Konnektor (10), wobei an dem doppelwandigen Konnektor (10) erste und zweite Kugelköpfe (20, 26) angeordnet sind, die jeweils von Kugelkäfigen (52, 54) in allen Ebenen drehbar dichtend übergriffen sind, die an den doppelwandigen Anschlüssen (46) zur Aufnahme darin axial verschiebbarer doppelwandiger Rohrenden (80, 82) ausgeführt sind, **dadurch gekennzeichnet, dass** die zweiten Kugelköpfe (26) am Außenumfang des doppelwandigen Konnektors (10) über ein Außen-/Innengewinde (94, 96) in axiale Richtung verstellbar angeordnet sind.

2. Vorrichtung gemäß Anspruch 1, **dadurch gekennzeichnet, dass** die ersten und zweiten Kugelköpfe (20, 26) an dem doppelwandigen Konnektor (10) konzentrisch positioniert sind.

3. Vorrichtung gemäß Anspruch 1, **dadurch gekennzeichnet, dass** die ersten Kugelköpfe (20) am doppelwandigen Konnektor (10) ausgeführt sind.

4. Vorrichtung gemäß Anspruch 1, **dadurch gekennzeichnet, dass** ein erster und ein zweiter Spannring (28, 30), die zweiten Kugelköpfe (26) übergreifend, am doppelwandigen Konnektor (10) vormontiert sind.

5. Vorrichtung gemäß Anspruch 4, **dadurch gekennzeichnet, dass** der erste und der zweite Spannring (28, 30) Innendurchmesser aufweisen, die geringer sind als Außendurchmesser der zweiten Kugelköpfe (26).

6. Vorrichtung gemäß Anspruch 4 **dadurch gekennzeichnet, dass** der erste und der zweite Spannring (28, 30) aus einem Material gefertigt sind, das Gleiteigenschaften aufweist, beispielsweise PEEK, PA66, PTFEbeschichtetes Material, um eine positionierte Dichtung mit Führungsfunktion zu ersetzen.

7. Vorrichtung gemäß Anspruch 4, **dadurch gekennzeichnet, dass** der erste und der zweite Spannring (28, 30) in Umfangsrichtung geschlossen ausgeführt ist oder zwei oder mehrere radial voneinander getrennte Segmente aufweist.

8. Vorrichtung gemäß der Ansprüche 1 bis 4, **dadurch gekennzeichnet, dass** der doppelwandige Konnektor (10) bevorzugt aus Aluminium, die zweiten Kugelköpfe (26) bevorzugt aus Titan, die ersten und zweiten Spannringe (28, 30) sowie die doppelwandigen Anschlüsse (46) bevorzugt aus PEEK gefertigt sind.

9. Vorrichtung gemäß Anspruch 1, **dadurch gekennzeichnet, dass** die doppelwandigen Anschlüsse (46) ein Außenteil (48) und ein Innenteil (50) aufweisen.

10. Vorrichtung gemäß Anspruch 9, **dadurch gekennzeichnet, dass** am Außenumfang des Innenteiles (50) ein erster Führungsring (56) und von diesem axial beabstandet ein zweiter Dichtring (60) angeordnet sind.

11. Vorrichtung gemäß Anspruch 9, **dadurch gekennzeichnet, dass** ein erster Kugelkäfig (52) mit einem ersten konzentrisch zum ersten Kugelkopf (20) positionierten ersten Dichtring (58) im Innenteil (50) ausgeführt ist und der zweite Kugelkäfig (54) mit zwei zur konzentrischen Positionierung des zweiten Kugelkopfes (26) axial versetzten Elementen, einem vierten Dichtring (64) und einem zweiten Führungsring (88) im Außenteil (48) versehen ist.

12. Vorrichtung gemäß Anspruch 9, **dadurch gekennzeichnet, dass** im gefügten Zustand von Außenteil (48) und Innenteil (50) eine am Innenteil (50) angeordnete Lochscheibe (70) einen axialen Einschubraum (55) für doppelwandige Rohrenden (80, 82) begrenzt.

13. Vorrichtung gemäß Anspruch 4, **dadurch gekennzeichnet, dass** im gefügten Zustand des Außenteiles (48) des doppelwandigen Anschlusses (46) und des ersten und zweiten Spannringes (28, 30) eine umlaufende Fläche (98) an den Spannringen (28, 30) Winkelversätze (32, 78) der doppelwandigen Rohrenden (80, 82) umlaufend gleich begrenzt.

14. Vorrichtung gemäß einem der Ansprüche 1 bis 9, **dadurch gekennzeichnet, dass** die zweiten Kugelkäfige (54) zu den zweiten Kugelköpfen (26) über einen vierten Dichtring (64) und einen zweiten Führungsring (88) mit kleinerem Durchmesser als die zweiten Kugelköpfe (26) zur konzentrischen Positionierung axial versetzt angeordnet, gegenseitig axial zu den zweiten Kugelköpfen (26) verspannt, sind.

15. Vorrichtung gemäß Anspruch 1, **dadurch gekennzeichnet, dass** die ersten Kugelkäfige (52) jeweils einen ersten Dichtring (58) aufnehmen, der einen mit dem Durchmesser des ersten Kugelkopfes (20) identischen Durchmesser aufweist und Abweichungen der Konzentrizität des zweiten Kugelkopfes (26) in Bezug auf die ersten Kugelköpfe (20) ausgleicht.

16. Vorrichtung gemäß der Ansprüche 4 und 11, **dadurch gekennzeichnet, dass** die ersten und zweiten Spannringe (28, 30) den vierten Dichtring (64) und den zweiten Führungsring (88) in axiale Richtung vorspannen und die zweiten Kugelkäfige (54) in Bezug auf die zweiten Kugelköpfe (26) zentrieren.

17. Verwendung der Vorrichtung gemäß einem der Ansprüche 1 bis 16 in einem Luftfahrzeug.

## Claims

1. Device having a double-walled connector (10) and double-walled attachments (46) for connecting pipe ends (80, 82) of double-walled pipes (72, 74) for angular compensation and for length compensation in the event of relative movements of the pipes (72, 74) relative to the double-walled connector (10), wherein, on the double-walled connector (10), there are arranged first and second ball heads (20, 26) which are each sealingly engaged over by ball cages (52, 54) in a manner rotatable in all planes, which ball cages are formed on the double-walled attachments (46) for receiving double-walled pipe ends (80, 82) which are axially displaceable therein, **characterized in that** the second ball heads (26) are arranged on the outer periphery of the double-walled connector (10) in a manner adjustable in an axial direction via an outer/inner thread (94, 96).

2. Device according to Claim 1, **characterized in that** the first and second ball heads (20, 26) are positioned concentrically on the double-walled connector (10).

3. Device according to Claim 1, **characterized in that** the first ball heads (20) are formed on the double-walled connector (10).

4. Device according to Claim 1, **characterized in that** a first and a second clamping ring (28, 30) are pre-fitted on the double-walled connector (10) in a manner engaging over the second ball heads (26).

5. Device according to Claim 4, **characterized in that** the first and second clamping rings (28, 30) have inner diameters which are smaller than outer diameters of the second ball heads (26).

6. Device according to Claim 4, **characterized in that** the first and second clamping rings (28, 30) are manufactured from a material which has sliding properties, for example PEEK, PA66, PTFE-coated material, in order to replace a positioned seal having a guiding function.

7. Device according to Claim 4, **characterized in that** the first and second clamping rings (28, 30) are of closed form in a circumferential direction or have two or more segments which are separated radially from one another.

8. Device according to Claims 1 to 4, **characterized in that** the double-walled connector (10) is manufactured preferably from aluminium, the second ball heads (26) are manufactured preferably from titanium, and the first and second clamping rings (28, 30) and the double-walled attachments (46) are manufactured preferably from PEEK.

9. Device according to Claim 1, **characterized in that** the double-walled attachments (46) have an outer part (48) and an inner part (50).

10. Device according to Claim 9, **characterized in that** a first guide ring (56) and, spaced apart axially therefrom, a second guide ring (60) are arranged on the outer periphery of the inner part (50).

11. Device according to Claim 9, **characterized in that** a first ball cage (52) is formed with a first sealing ring (58) in the inner part (50), which sealing ring is positioned concentrically with respect to the first ball head (20), and the second ball cage (54) is provided with two elements which are offset axially for the concentric positioning of the second ball head (26), a fourth sealing ring (64) and a second guide ring (88), in the outer part (48).

12. Device according to Claim 9, **characterized in that**, in the joined state of outer part (48) and inner part (50), a perforated disc (70) arranged on the inner part (50) delimits an axial insertion space (55) for double-walled pipe ends (80, 82).

13. Device according to Claim 4, **characterized in that**, in the joined state of the outer part (48) of the double-walled attachment (46) and of the first and second clamping rings (28, 30), an encircling surface (98) on the clamping rings (28, 30) limits angular offsets (32, 78) of the double-walled pipe ends (80, 82) uniformly in an encircling manner.

14. Device according to one of Claims 1 to 9, **characterized in that** the second ball cages (54), arranged offset axially with respect to the second ball heads (26) via a fourth sealing ring (64) and a second guide ring (88) having a smaller diameter than the second ball heads (26) for concentric positioning, are mutually braced axially with respect to the second ball heads (26).

15. Device according to Claim 1, **characterized in that** the first ball cages (52) each receive a first sealing ring (58) which has a diameter identical to the diameter of the first ball head (20) and which compensates for deviations in the concentricity of the second ball head (26) in relation to the first ball heads (20).

16. Device according to Claims 4 and 11, **characterized in that** the first and second clamping rings (28, 30) preload the fourth sealing ring (64) and the second guide ring (88) in the axial direction and centre the second ball cages (54) in relation to the second ball heads (26).

17. Use of the device according to one of Claims 1 to 16 in an aircraft.

## Revendications

1. Dispositif comprenant un connecteur à double paroi (10) et des raccords à double paroi (46) pour le raccordement d'extrémités de tubes (80, 82) de tubes à double paroi (72, 74) pour la compensation d'angle et pour la compensation de longueur lors de mouvements relatifs des tubes (72, 74) par rapport au connecteur à paroi double (10), des premières et deuxièmes têtes sphériques (20, 26) étant agencées sur le connecteur à double paroi (10), qui sont respectivement recouvertes de manière étanche et de manière rotative dans tous les plans par des cages sphériques (52, 54), qui sont réalisées sur les raccords à double paroi (46) pour recevoir des extrémités de tubes à double paroi (80, 82) pouvant être déplacées axialement dans ceux-ci, **caractérisé en ce que** les deuxièmes têtes sphériques (26) sont agencées de manière ajustable dans la direction axiale sur la périphérie extérieure du connecteur à double paroi (10) par l'intermédiaire d'un filetage extérieur/intérieur (94, 96).

2. Dispositif selon la revendication 1, **caractérisé en ce que** les premières et deuxièmes têtes sphériques (20, 26) sont positionnées de manière concentrique sur le connecteur à double paroi (10).

3. Dispositif selon la revendication 1, **caractérisé en ce que** les premières têtes sphériques (20) sont réalisées sur le connecteur à double paroi (10).

4. Dispositif selon la revendication 1, **caractérisé en ce qu'**une première et une deuxième bague de serrage (28, 30), recouvrant les deuxièmes têtes sphériques (26), sont prémontées sur le connecteur à double paroi (10) .

5. Dispositif selon la revendication 4, **caractérisé en ce que** la première et la deuxième bague de serrage (28, 30) présentent des diamètres intérieurs qui sont plus petits que les diamètres extérieurs des deuxièmes têtes sphériques (26).

6. Dispositif selon la revendication 4, **caractérisé en ce que** la première et la deuxième bague de serrage (28, 30) sont fabriquées en un matériau qui présente des propriétés de glissement, par exemple le PEEK, le PA66, un matériau revêtu du PTFE, afin de remplacer un joint positionné avec une fonction de guidage.

7. Dispositif selon la revendication 4, **caractérisé en ce que** la première et la deuxième bague de serrage (28, 30) sont réalisées sous forme fermée dans la direction périphérique ou comprennent deux ou davantage de segments séparés radialement les uns des autres.

8. Dispositif selon les revendications 1 à 4, **caractérisé en ce que** le connecteur à double paroi (10) est de préférence fabriqué en aluminium, les deuxièmes têtes sphériques (26) sont de préférence fabriquées en titane, les première et deuxième bagues de serrage (28, 30), ainsi que les raccords à double paroi (46) sont de préférence fabriqués en PEEK.

9. Dispositif selon la revendication 1, **caractérisé en ce que** les raccords à double paroi (46) comprennent une partie extérieure (48) et une partie intérieure (50) .

10. Dispositif selon la revendication 9, **caractérisé en ce qu'**une première bague de guidage (56) et, espacée axialement de celle-ci, une deuxième bague d'étanchéité (60) sont agencées sur la périphérie extérieure de la partie intérieure (50).

11. Dispositif selon la revendication 9, **caractérisé en ce qu'**une première cage sphérique (52) est réalisée avec une première bague d'étanchéité (58) positionnée concentriquement par rapport à la première tête sphérique (20) dans la partie intérieure (50) et la deuxième cage sphérique (54) est munie de deux éléments décalés axialement pour le positionnement concentrique de la deuxième tête sphérique (26), d'une quatrième bague d'étanchéité (64) et d'une deuxième bague de guidage (88) dans la partie extérieure (48).

12. Dispositif selon la revendication 9, **caractérisé en ce qu'**à l'état assemblé de la partie extérieure (48) et de la partie intérieure (50), une plaque perforée (70) agencée sur la partie intérieure (50) limite un espace d'insertion axial (55) pour des extrémités de tubes à double paroi (80, 82).

13. Dispositif selon la revendication 4, **caractérisé en ce qu'**à l'état assemblé de la partie extérieure (48) du raccord à double paroi (46) et de la première et deuxième bague de serrage (28, 30), une surface périphérique (98) sur les bagues de serrage (28, 30) limite de manière uniforme sur la périphérie des décalages d'angle (32, 78) des extrémités de tubes à double paroi (80, 82).

14. Dispositif selon l'une quelconque des revendications 1 à 9, **caractérisé en ce que** les deuxièmes cages sphériques (54) sont agencées en décalage axial par rapport aux deuxièmes têtes sphériques (26) par l'intermédiaire d'une quatrième bague d'étanchéité (64) et d'une deuxième bague de guidage (88) ayant un diamètre plus petit que les deuxièmes têtes sphériques (26) pour le positionnement concentrique, mutuellement serrées axialement par rapport aux deuxièmes têtes sphériques (26).

15. Dispositif selon la revendication 1, **caractérisé en ce que** les premières cages sphériques (52) reçoivent respectivement une première bague d'étanchéité (58), qui présente un diamètre identique au diamètre de la première tête sphérique (20), et compense des déviations de la concentricité de la deuxième tête sphérique (26) par rapport aux premières têtes sphériques (20).

16. Dispositif selon les revendications 4 et 11, **caractérisé en ce que** les première et deuxième bagues de serrage (28, 30) pré-serrent la quatrième bague d'étanchéité (64) et la deuxième bague de guidage (88) dans la direction axiale, et centrent les deuxièmes cages sphériques (54) par rapport aux deuxièmes têtes sphériques (26).

17. Utilisation du dispositif selon l'une quelconque des revendications 1 à 16 dans un aéronef.
